# EUROPÄISCHE PATENTSCHRIFT

(11) **EP 1 912 828 B1**
(45) Veröffentlichungstag und Bekanntmachung des Hinweises auf die Patenterteilung: **16.02.2011**
(21) Anmeldenummer: 06776787.1
(22) Anmeldetag: 11.08.2006
(51) Int. Cl.: B60R 16/027

(54) **LENKSÄULENMODUL**
STEERING COLUMN MODULE
MODULE DE COLONNE DE DIRECTION

(30) Priorität: 12.08.2005 DE 102005038145
(43) Veröffentlichungstag der Anmeldung: 23.04.2008
(73) Patentinhaber: Leopold Kostal GmbH & Co. KG, 58507 Lüdenscheid (DE)
(72) Erfinder: HEITE, Volker, 57462 Olpe (DE); HIRSCHFELD, Klaus, 58515 Lüdenscheid (DE)
(74) Vertreter: Kerkmann, Detlef
(86) Internationale Anmeldenummer: PCT/EP2006/007968
(87) Internationale Veröffentlichungsnummer: WO 2007/020019

(56) Entgegenhaltungen:
- EP-A- 1 538 029
- EP-A1- 0 887 234
- EP-A1- 1 024 055
- DE-C1- 4 428 883
- FR-A1- 2 732 284

## Beschreibung

Die vorliegende Erfindung betrifft ein Lenksäulenmodul für ein Kraftfahrzeug, umfassend zumindest einen Hebelschalter, der an seinem lenksäulennahen Ende durch Verschwenken seines Hebels betätigbare primäre Schaltelemente sowie an seinem lenksäulenfernen Ende durch dort angebrachte Bedienelemente ansteuerbare sekundäre Schaltelemente aufweist, sowie eine elektrisch einerseits mit dem Bordnetz und andererseits mit den primären und sekundären Schaltelementen verbundene Elektronikeinheit.

Derartige Lenksäulenmodule sind in Kraftfahrzeugen dazu vorgesehen, verschiedene Funktionen - wie z.B. die Fahrtrichtungsanzeige oder Wisch-Wasch -Vorgänge bzw. Signalübertragungen oder die Lenkwinkelerfassung auszulösen bzw. zu realisieren und umfassen daher verschiedene Funktionskomponenten, wie beispielsweise eine Wickelfederkassette zur Stromversorgung und Signalübertragung in das Lenkrad, einen Lenkwinkelsensor zur Erfassung des Lenkeinschlages sowie verschiedene Hebelschalter, welche den unterschiedlichen Bedienfunktionen, wie etwa der Fahrtrichtungsanzeige, der Lichtumschaltung dem Scheibenwischer oder der Scheibenwaschanlage und so weiter zugeordnet sind.

Diesen unterschiedlichen Funktionskomponenten ist eine zentrale ⁻Elektronikeinheit zugeordnet, welche z.B. Leistungs-, Auswerte- und gegebenenfalls Steuerungselektronikumfänge der Funktionkomponenten enthält, und welche die verschiedenen Funktionskomponenten mit dem Bordnetz verbindet.

Die DE 101 08 377 C1 zeigt ein Lenksäulenmodul, bei dem mehrere Hebelschalter sowie weitere unterschiedliche Funktionskomponenten mit einer zentralen Elektronikeinheit verbunden und über diese elektrisch an das Bordnetz des Kraftfahrzeugs angebunden sind. Die elektrische Verbindung der Funktionskomponenten mit der Elektronikeinheit ist hierbei über Steckverbindungen realisiert, die beim direkten Zusammenfügen der Gehäuse miteinander in Eingriff kommen. Aufgrund der sehr unterschiedlichen Gehäuseformen der verschiedenen Funktionskomponenten müssen dabei teilweise sehr komplizierte und dementsprechend kostenaufwendig herzustellende Steckverbinder eingesetzt werden. Bei einer Vielzahl von Funktionskomponenten ist zudem nur wenig Spielraum für die Anordnung der verschiedenen Steckverbinder vorhanden, so daß insbesondere auf der Leiterplatte der Elektronikeinheit wertvoller Bauraum nur unzureichend genutzt wird.

Das Lenksäulenmodul gemäß der vorliegenden Erfindung hat gegenüber diesem vorbekannten Modul den Vorteil, daß bei einem unverändert kompakten Aufbau des gesamten Moduls dieses deutlich kostengünstiger zu realisieren ist, und daß eine wesentlich bessere Nutzung der Leiterplattenflächen ermöglicht ist.

Dies gelingt erfindungsgemäß dadurch, daß die primären und sekundären Schaltelemente sowie die Elektronikeinheit jeweils eine Leiterplatte aufweisen, die an jeweils einem ihrer Randbereiche als Kontaktflächen ausgebildete Leiterbahnabschnitte aufweist, und daß die Schaltelemente mittels eines mit zur Kontaktierung dieser Kontaktflächen vorgesehenen Steckverbinderelementen versehenen Leitungssatzes mit der Elektronikeinheit verbunden sind.

Besonders kostengünstig und einfach zu montieren ist das Lenksäulenmodul, wenn der Leitungssatz auf Seiten der primären und sekundären Schaltelemente jeweils ein Steckverbinderelement sowie auf der Seite der Elektronikeinheit ein gemeinsames Steckverbinderelement aufweist.

Weitere besonders günstige Ausgestaltungen des erfindungsgemäßen Gegenstands sind in den weiteren Unteransprüchen angegeben und werden anhand des in der Zeichnung dargestellten Ausführungsbeispiels näher erläutert. Es zeigen:

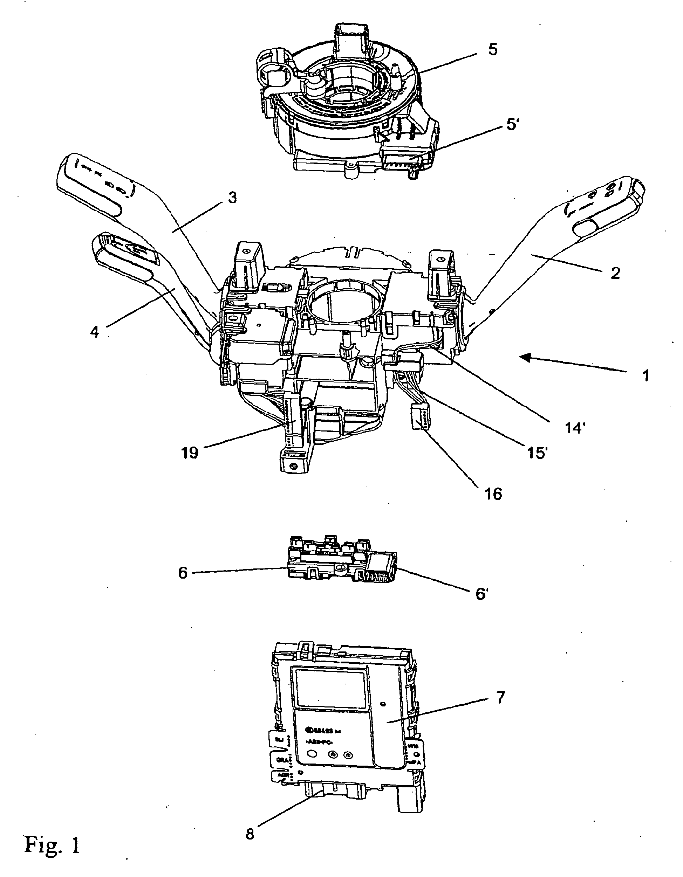

- **Fig. 1:**: Ein erfindungsgemäßes Lenksäulenmodul in einer Explosionsdarstellung
- **Fig. 2:**: das Lenksäulenmodul in einer aus Fig. 1 in einer Ansicht von unten mit teilweise geöffneten Hebelschaltern

Wie aus der Zeichnung zu sehen, umfasst das Lenksäulenmodul als Basis eine Trägereinheit 1, mit der drei Hebelschalter 2, 3, 4 mechanisch fest verbunden sind. Die Trägereinheit 1 wird über in dieser Darstellung nicht erkennbare Befestigungsmittel direkt an der Lenksäule festgelegt. Weitere Funktionskomponenten des Lenksäulenmoduls, wie eine Wickelfederkassette 5, ein Lenkwinkelsensor 6 und eine Elektronikeinheit 7 werden an der Trägereinheit 1 mechanisch befestigt und über diese an der Lenksäule fixiert. Die elektrische Verbindung der Funktionskomponenten einschließlich der Hebelschalter 2, 3, 4 mit dem Bordnetz des Kraftfahrzeugs erfolgt über die Elektronikeinheit 7. Diese verfügt dazu ihrerseits über einen Steckverbinderanschluß 8, an den ein mit dem Bordnetz verbundener Leitungssatz anschließbar ist.

Die Wickelfederkassette 5 und der Lenkwinkelsensor 6 sind über Steckverbinder 5', 6' direkt mit der Elektronikeinheit 7 elektrisch verbunden. Die elektrische Verbindung der Hebelschalter 2, 3, 4 mit der Elektronikeinheit 7 erfolgt dagegen über Leitungssätze.

Die Hebelschalter können dabei jeweils zweierlei unterschiedliche Betätigungsmechanismen umfassen. Einerseits sind sie jeweils insgesamt um zumindest eine Achse verschwenkbar. Durch diese Art der Hebelbetätigung werden Schaltfunktionen angesteuert, die jeweils durch primäre, im lenksäulennahen Fußbereich der Hebel vorhandene Schaltelemente realisiert sind. Darüberhinaus verfügen zumindest einige der Hebelschalter auch noch über jeweils in ihrem lenksäulenfernen Kopfbereich angeordnete Betätigungselemente, die mit entsprechend ausgebildeten, ebenfalls in diesem Bereich angeordneten sekundären Schaltelementen kooperieren.

Die Schaltelemente können dabei in vielfältiger Art ausgeführt sein, z.B. als Mikroschalter oder Domschaltelemente oder etwa durch Schleifkontakte, die als bewegliche Schaltkontakte mit als Festkontakten fungierenden, auf einem Schaltungssubstrat aufgebrachten Kontaktflächen oder Widerstandsbahnen kooperieren. Gemeinsames Merkmal sämtlicher Schaltelemente ist jedoch, daß in jedem einer Schaltfunktion zugeordneten Kopf- oder Fußbereich eines jeden Hebelschalters zumindest ein insbesondere als Leiterplatte ausgebildetes Schaltungssubstrat vorhanden ist.

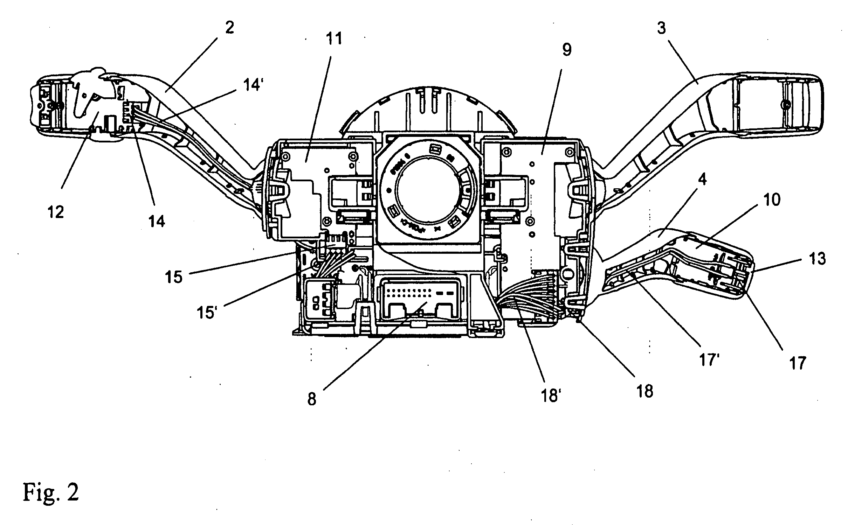

So ist in Fig. 2 die Leiterplatte 9 zu erkennen, die sich über den Fußbereich sowohl des Blinkerschalters 3 als auch des Tempomatschalters 4 erstreckt, und auf ihrer Oberseite gemeinsam deren jeweilige Festkontaktelemente aufweist. Diese sind im vorliegenden Falle als Kontaktflächen ausgebildet, die zur Realisierung der entsprechenden Schaltfunktionen durch mit den jeweiligen Hebeln verbundene Vielfingerschleifer kontaktiert werden. Im Kopfbereich des Tempomatschalters 4 ist eine weitere Leiterplatte 10 vorhanden, die die durch den Druckknopf 13 betätigbaren Schaltelemente aufnimmt.

Ebenfalls in Fig. 2 erkennbar sind die im Fußbereich des Wischerschalters 2 angebrachte Leiterplatte 11, sowie die in seinem Kopfbereich angeordnete Leiterplatte 12, die den jeweils dort zu realisierenden Schaltfunktionen zugeordnet sind.

Die elektrische Verbindung der Schaltelemente mit der Elektronikeinheit 7 erfolgt über Leitungssätze, die zur Kontaktierung der Schaltelemente mit Steckverbindern versehen sind, die als sogenannte Leiterplattenrandverbinder ausgebildet sind, d.h. deren Gegensteckkontakt durch eine entsprechend ausgeführte Kontaktfläche auf einer Leiterplatte gebildet ist.

Die Leiterplatten 9, 10, 11, 12 sind dazu in jeweils einem ihrer Randbereiche mit Kontaktflächen versehen, die zur elektrischen Kontaktierung mit den so beschaffenen Steckverbindern geeignet sind.

Der dem Wischerhebel 2 zugeordnete Leitungssatz umfasst dabei den die Leiterplatte 12 im Kopfbereich desselben kontaktierenden Steckverbinder 14 sowie den die Leiterplatte 11 im Fußbereich desselben kontaktierenden Steckverbinder 15. Die von diesen beiden Steckverbindern 14, 15 abgehenden Leitungen 14', 15' führen zu dem gemeinsamen, zur Kontaktierung der Leiterplatte der Elektronikeinheit 7 ebenfalls als Leiterplattenrandverbinder ausgebildeten Steckverbinder 16.

Ein zweiter, ähnlicher Leitungssatz ist auf der Blinker- und Tempomatseite des Lenksäulenmoduls angeordnet. Die von dem Steckverbinder 17 an der Leiterplatte 10 im Kopfbereich des Tempomatschalters 4 abgehende Leitung 17' sowie die Leitung 18', die von dem die Leiterplatte 9 im gemeinsamen Fußbereich der beiden Hebelschalter 3, 4 kontaktierenden Steckverbinder 18 abgeht, führen zu dem ebenfalls zur Kontaktierung der Leiterplatte der Elektronikeinheit 7 vorgesehenen gemeinsamen Steckverbinder 19.

## Patentansprüche

1. Lenksäulenmodul für ein Kraftfahrzeug, umfassend zumindest einen Hebelschalter (2, 3, 4), der an seinem lenksäulennahen Ende durch Verschwenken seines Hebels betätigbare primäre Schaltelemente sowie an seinem lenksäulenfernen Ende durch dort angebrachte Bedienelemente ansteuerbare sekundäre Schaltelemente aufweist, sowie eine elektrisch einerseits mit dem Bordnetz und andererseits mit den primären und sekundären Schaltelementen verbundene Elektronikeinheit (7), **dadurch gekennzeichnet, daß** die primären und sekundären Schaltelemente sowie die Elektronikeinheit (7) jeweils eine Leiterplatte (9, 10, 11, 12) aufweisen, die an jeweils einem ihrer Randbereiche als Kontaktflächen ausgebildete Leiterbahnabschnitte aufweist, und daß die Schaltelemente mittels eines mit zur Kontaktierung dieser Kontaktflächen vorgesehenen Steckverbinderelementen (14, 15, 16; 17, 18, 19) versehenen Leitungssatzes mit der Elektronikeinheit (7) verbunden sind.

2. Lenksäulenmodul nach Anspruch 1, **dadurch gekennzeichnet, daß** der Leitungssatz auf Seiten der primären und sekundären Schaltelemente jeweils ein Steckverbinderelement (14, 15; 17, 18) sowie auf der Seite der Elektronikeinheit ein gemeinsames Steckverbinderelement (16; 18) aufweist.

3. Lenksäulenmodul nach Anspruch 1 oder 2, **dadurch gekennzeichnet, daß** der zumindest eine Hebelschalter Teil einer Trägereinheit (1) ist, die zur Aufnahme weiterer Komponenten (5, 6, 7) des Lenksäulenmoduls vorgesehen ist, und die ihrerseits durch entsprechende Befestigungsmittel mechanisch an der Lenksäule festgelegt ist.

4. Lenksäulenmodul nach einem der Ansprüche 1 bis 3, **dadurch gekennzeichnet, daß** zumindest eines der Schaltelemente durch als Festkontakte fungierende Kontaktflächen auf einer Leiterplatte (9, 10, 11, 12) und mit diesen kooperierende, als bewegliche Kontakte fungierende Vielfingerschleifer gebildet ist.

## Claims

1. Steering column module for a motor vehicle, comprising at least one lever switch (2, 3, 4) having primary switching elements at its end nearest to the steering column that can be operated by pivoting the stalk, and secondary switching elements at its end furthest away from the steering column that can be operated by control elements attached there, as well as an electronic unit (7) which is electrically connected to the on-board power supply on the one hand and to the primary and secondary switching elements on the other hand, **characterised in that** the primary and secondary switching elements and the electronic unit (7) each have a printed circuit board (9, 10, 11, 12) each having printed conductor sections on one of its edge zones configured as contact areas, and that the switching elements are connected to the electronic unit (7) by means of a set of cables provided with plug-type connector elements (14, 15, 16; 17, 18, 19) provided for contacting the said contact areas.

2. Steering column module in accordance with Claim 1, **characterised in that** the set of cables has a plug-type connector element (14, 15; 17, 18) on the side of each of the primary and secondary switching elements as well as a common plug-type connector element (16; 18) on the electronic unit side.

3. Steering column module in accordance with Claim 1 or Claim 2, **characterised in that** the at least one lever switch is a component of a support assembly (1) which is provided for receiving further components (5, 6, 7) of the steering column module, and which for its part is mechanically secured to the steering column by way of appropriate fastening means.

4. Steering column module in accordance with any of Claims 1 to 3, **characterised in that** at least one of the switching elements is constituted by contact areas functioning as fixed contacts on a printed circuit board (9, 10, 11, 12) and multi-finger wipers functioning as moveable contacts that cooperate with the same.

## Revendications

1. Module de colonne de direction, destinée à un véhicule automobile, comprenant au moins un commutateur à levier (2, 3, 4), qui présente, à son extrémité proche de la colonne de direction, des éléments de commutation primaires, pouvant être actionnés par pivotement de son levier, et, à son extrémité éloignée de la colonne de direction, des éléments de commutation secondaires, commandés par des éléments de commande, installés à cet endroit, ainsi qu'une unité électronique (7), qui est reliée électriquement au réseau de bord, d'une part, et aux éléments de commutation primaires et secondaires, d'autre part, **caractérisé en ce que** les éléments de commutation primaires et secondaires, ainsi que l'unité électronique (7) présentent chacun une plaquette de circuits (9, 10, 11, 12), qui présente, sur l'une de ses sections marginales, des sections de pistes conductrices, formées en tant que surfaces de contact, et **en ce que** les éléments de commutation sont reliés à l'unité électronique (7) au moyen d'un faisceau de câblage, qui est pourvu d'éléments de connexion enfichables (14, 15, 16 : 17, 18, 19), prévus pour la mise en contact avec ces surfaces de contact.

2. Module de colonne de direction selon la revendication 1, **caractérisé en ce que** le faisceau de câblage présente, de chaque côté des éléments de commutation primaires et secondaires, un élément de connexion enfichable (14, 15 ; 17, 18), et, du côté de l'unité électronique, un élément de connexion enfichable commun (16 ; 18).

3. Module de colonne de direction selon revendication 1 ou 2, **caractérisé en ce que** le commutateur à levier au moins prévu fait partie d'une unité de support (1 ), qui est prévue pour recevoir d'autres composants (5, 6, 7) du module de colonne de direction, et qui, de son côté, est fixée mécaniquement à la colonne de direction par des moyens de fixation appropriés.

4. Module de colonne de direction selon l'une des revendications 1 à 3, **caractérisé en ce que** l'un des éléments de commutation, au moins, est formé par des surfaces de contact, qui agissent en tant que contacts fixes, sur une plaquette de circuits (9, 10, 11, 12), et des contacts glissants à doigts multiples, qui, coopérant avec celles-ci, agissent en tant que contacts mobiles.
